# EUROPÄISCHE PATENTANMELDUNG

(11) **EP 4 292 873 A1**
(43) Veröffentlichungstag der Anmeldung: **20.12.2023**
(21) Anmeldenummer: 23175242.9
(22) Anmeldetag: 25.05.2023
(51) Int. Cl.: B60N 2/16, B60N 2/225, B60N 2/68, B60N 2/12, B60N 2/02

(54) **KRAFTFAHRZEUGSITZ**

(30) Priorität: 13.06.2022 DE 102022114760
(71) Anmelder: Faurecia Autositze GmbH, 30419 Hannover (DE)
(72) Erfinder: Unrau, Dimitri, 31712 Niedernwöhren (DE)
(74) Vertreter: REHBERG HÜPPE + PARTNER

(57) **Zusammenfassung**

Die Erfindung betrifft einen Kraftfahrzeugsitz (1) mit einem Sitzpolster-Rahmen (3), der Sitzpolster-Seitenrahmenteile (5) aufweist und über eine Viergelenkkette mit vorderen und hinteren Kopplungsschwingen (9) in einer Höhe H gegenüber einem Boden abgestützt ist, und mit einem Rückenlehnen-Rahmen (4), der Rückenlehnen-Seitenrahmenteile (6) aufweist. Über eine Sitzhöhen-Verstelleinrichtung ist eine Veränderung der Höhe H des Sitzpolsterrahmens (3) möglich. Mittels einer Rückenlehnenneigung-Verstelleinrichtung (17) kann eine Veränderung der Neigung des Rückenlehnen-Rahmens (4) gegenüber dem Sitzpolster-Rahmen (3) um eine Verstellachse erfolgen. Ein Verbindungsrohr (25) verbindet die beiden Sitzpolster-Seitenrahmenteile (5) miteinander. Das Verbindungsrohr (25) ist auch mit den hinteren Kopplungsschwingen (9) verbunden. Erfindungsgemäß verläuft die Verstellachse durch den Querschnitt des Verbindungsrohrs (25).

## Beschreibung

### TECHNISCHES GEBIET DER ERFINDUNG

Die Erfindung betrifft einen Kraftfahrzeugsitz und insbesondere eine Tragstruktur desselben mit einem Sitzpolster-Rahmen, einem Rückenlehnen-Rahmen und einer Rückenlehnenneigung-Verstelleinrichtung sowie einer Sitzhöhen-Verstelleinrichtung.

### STAND DER TECHNIK

Tragstrukturen von Kraftfahrzeugsitzen sind beispielsweise aus den Druckschriften US 11 214 180 B1 und KR 2021/0067583 A bekannt.

### AUFGABE DER ERFINDUNG

Der vorliegenden Erfindung liegt die Aufgabe zugrunde, einen Kraftfahrzeugsitz, insbesondere eine Tragstruktur desselben, vorzuschlagen, welcher oder welche insbesondere hinsichtlich
- einer kompakten Bauweise und/oder
- des Aufnahmeraums unter dem Fahrzeugsitz für den Vorderfuß einer hinter dem Kraftfahrzeugsitz sitzenden Person und/oder
- des Packagings und/oder
- der Kinematik und/oder
- der Kraftaufnahme und -verteilung
verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Der erfindungsgemäße Kraftfahrzeugsitz verfügt über einen Sitzpolster-Rahmen sowie einen Rückenlehnen-Rahmen. Der Sitzpolster-Rahmen weist Sitzpolster-Seitenrahmenteile auf. Der Sitzpolster-Rahmen, insbesondere die Sitzpolster-Seitenrahmenteile, ist/sind über eine Viergelenkkette mit vorderen und hinteren Kopplungsschwingen in einer Höhe H gegenüber einem Boden, insbesondere einer an dem Boden abgestützten Längsschiene, abgestützt. Der Rückenlehnen-Rahmen weist Rückenlehnen-Seitenrahmenteile auf.

In dem erfindungsgemäßen Kraftfahrzeugsitz ist des Weiteren eine Sitzhöhen-Verstelleinrichtung vorhanden, über die (manuell oder elektromotorisch) eine Veränderung der Höhe H des Sitzpolster-Rahmens möglich ist, wobei mit der Veränderung der Höhe auch eine Veränderung der Neigung des Sitzpolster-Rahmens einhergehen kann. Darüber hinaus verfügt der Kraftfahrzeugsitz über eine (manuelle oder elektromotorische) Rückenlehnenneigung-Verstelleinrichtung, mittels welcher eine Veränderung der Neigung des Rückenlehnen-Rahmens gegenüber dem Sitzpolster-Rahmen um eine Verstellachse erfolgt.

Der erfindungsgemäße Kraftfahrzeugsitz verfügt über ein Verbindungsrohr, welches die beiden Sitzpolster-Seitenrahmenteile miteinander verbindet. Das Verbindungsrohr ist des Weiteren mit den Kopplungsschwingen verbunden. Möglich ist dabei, dass das Verbindungsrohr ohne verbleibenden Freiheitsgrad an den Kopplungsschwingen befestigt ist, wobei dann vorzugsweise das Verbindungsrohr drehbar gegenüber den beiden Sitzpolster-Seitenrahmenteilen gelagert ist. Alternativ möglich ist, dass das Verbindungsrohr ohne Freiheitsgrad an den Sitzpolster-Seitenrahmenteilen befestigt ist, während dann die Verbindung des Verbindungsrohrs mit den Kopplungsschwingen über einen Drehfreiheitsgrad erfolgen kann.

Die Erfindung schlägt vor, dass die Verstellachse der Rückenlehnenneigung-Verstelleinrichtung durch den Querschnitt des Verbindungsrohrs verläuft. Das Verbindungsrohr kann dabei über einen beliebigen Hohlquerschnitt verfügen, wobei in diesem Fall die Verstellachse durch den Innenraum des Verbindungsrohrs verlaufen kann.

Der Erfindung liegt die Erkenntnis zugrunde, dass für aus dem Stand der Technik bekannte Ausführungsformen die Sitzpolster-Seitenrahmenteile im hinteren Endbereich über ein Verbindungsrohr fest miteinander verbunden waren und sich von dem Verbindungsrohr Fortsätze der Sitzpolster-Seitenrahmenteile zumindest mit einer Komponente nach oben erstrecken. Im Bereich dieser Fortsätze sind (beabstandet von dem Verbindungsrohr) dann die Rückenlehnenneigung-Verstelleinrichtungen und die Verstellachse derselben angeordnet. Diese bekannte Ausgestaltung hat mehrere Einschränkungen zur Folge. So ist beispielsweise für die bekannten Ausführungsformen unter Umständen zwingend erforderlich, dass die Rückenlehne und ein Polster derselben in einer größeren Höhe beginnt, was nachteilig sein kann für die Ausbildung eines Spaltes zwischen dem Sitzpolster und der Rückenlehne und/oder eine bequeme Liegefläche für den Fall, dass die Rückenlehne in eine Liegestellung verstellt wird, in welcher die Rückenlehne fast in einer Ebene mit dem Sitzpolster angeordnet ist. Des Weiteren führt diese Ausgestaltung zu einem großen Bauraum im hinteren Endbereich des Kraftfahrzeugsitzes, da einerseits das Verbindungsrohr und die zugeordneten Teilabschnitte des Sitzpolster-Rahmens und andererseits die Rückenlehnenneigung-Verstelleinrichtung separat voneinander ausgebildet sind und übereinander angeordnet werden müssen. Dies ist beispielsweise nachteilig, wenn ein im hinteren Endbereich des Sitzpolster-Rahmens und im Übergangsbereich zu dem Rückenlehnen-Rahmen sowie im Bereich der Rückenlehnenneigung-Verstelleinrichtung kompakter Kraftfahrzeugsitz geschaffen werden soll. Der für diese Ausgestaltung benötigte Bauraum schränkt auch den Freiraum auf der Rückseite des Kraftfahrzeugsitzes zwischen der Unterseite des Sitzpolster-Rahmens und dem Boden ein, der aber erforderlich ist oder vorteilhaft sein kann, um den Vorderfußbereich der Person, die hinter dem Kraftfahrzeugsitz auf einer Rückbank sitzt, aufzunehmen. Dadurch, dass erfindungsgemäß abweichen hierzu die Verstellachse der Rückenlehnenneigung-Verstelleinrichtung durch den Querschnitt des Verbindungsrohrs verläuft, kann ein kompakter Bauraum geschaffen werden mit einem guten Packaging.

Im Rahmen der Erfindung kann die Rückenlehnenneigung-Verstelleinrichtung eine rechte Rückenlehnenneigung-Verstelleinheit und eine linke Rückenlehnenneigung-Verstelleinheit aufweisen, wobei diese jeweils über einen eigenen manuellen oder elektrischen Betätigungsantrieb verfügen können und/oder über gleiche oder unterschiedliche Funktionsumfänge verfügen können. Die rechte Rückenlehnenneigung-Verstelleinheit und die linke Rückenlehnenneigung-Verstelleinheit können für einen Vorschlag der Erfindung über eine Kopplungsstange miteinander gekoppelt sein. Die Kopplungsstange kann einerseits dazu dienen, bei einer Verriegelung mindestens einer Rückenlehnenneigung-Verstelleinheit eine steife Abstützung der Rückenlehne zu gewährleisten, bei welcher über die Kopplungsstange beide Rückenlehnenneigung-Verstelleinheiten denselben Neigungswinkel gemeinsam sichern können. Andererseits dient die Kopplungsstange dazu zu gewährleisten, dass bei einer manuellen oder elektrischen Verstellung lediglich einer Rückenlehnenneigung-Verstelleinheit oder beider Rückenlehnenneigung-Verstelleinheiten die Neigungswinkel der beiden Rückenlehnenneigung-Verstelleinheiten gleich sind und bleiben.

Gemäß einem erfindungsgemäßen Vorschlag kann sich die Kopplungsstange durch das Verbindungsrohr hindurch erstrecken, was ebenfalls zu einer kompakten Bauform mit einem guten Packaging führt. Darüber hinaus kann das Verbindungsrohr eine gewisse Schutzfunktion für die sich hierdurch erstreckende Kopplungsstange gewährleisten.

Im Rahmen der Erfindung ist durchaus möglich, dass sich die Verstellachse und/oder die Kopplungsstange zentral und koaxial zu einer Längs- oder Symmetrieachse des Verbindungsrohrs durch dieses hindurch erstreckt. Für einen besonderen Vorschlag der Erfindung erstreckt/erstrecken sich die Verstellachse und/oder die Kopplungsstange mit einem Versatz zu der Längs- oder Symmetrieachse durch das Verbindungsrohr. Auf diese Weise kann eine weiter verbesserte Ausnutzung des engen vorhandenen Bauraums erfolgen. Ist beispielsweise die Verstellachse und/oder die Kopplungsstange mit einem Versatz in horizontaler Richtung nach vorne gegenüber der Längs- oder Symmetrieachse des Verbindungsrohrs verlagert, kann vermieden werden, dass sich eine verhältnismäßig groß bauende Rückenlehnenneigung-Verstelleinrichtung über die Rückseite des Kraftfahrzeugsitzes und hier insbesondere über die Rückenlehne hinaus erstreckt. Ist die Verstellachse und/oder die Kopplungsstange mit einem Versatz in vertikaler Richtung nach unten gegenüber der Längs- oder Symmetrieachse des Verbindungsrohrs angeordnet, kann hierdurch eine weitere Verlagerung der Rückenlehne und des Rückenlehnen-Rahmens nach unten erfolgen. Beide vorgenannten Arten des Versatzes können unter Umständen auch einen Beitrag dazu liefern, dass ein manuelles Betätigungsorgan der Rückenlehnenneigung-Verstelleinrichtung für den Benutzer besser zugänglich ist. Es versteht sich, dass der Versatz zwei unterschiedliche Versatzkomponenten, nämlich eine Versatzkomponente in horizontaler Richtung (vorzugsweise nach vorne) und eine Versatzkomponente in vertikaler Richtung (vorzugsweise nach unten) aufweisen kann.

Für einen erfindungsgemäßen Kraftfahrzeugsitz wird vorgeschlagen, dass das Sitzpolster-Seitenrahmenteil Y-förmig oder gabelförmig ausgebildet ist mit einem Grundschenkel und zwei Gabelschenkeln. Hierbei kann der Grundschenkel einerseits und können die Gabelschenkel andererseits durchaus einen komplexen Querschnitt aufweisen und beispielsweise als Formteil, gepresstes Teil, Umformteil oder offenes oder geschlossenes Hohlprofil ausgebildet sein. Die beiden Gabelschenkel können für unterschiedliche Zwecke genutzt werden: Möglich ist, dass ein Gabelschenkel mit der Sitzhöhen-Verstelleinrichtung oder der hinteren Kopplungsschwinge verbunden ist, wobei diese Verbindung beispielsweise einen Dreh-Freiheitsgrad um eine Querachse gewährleisten kann. Der Gabelschenkel dient dann dazu, eine Sitzhöhen-Haltekraft und/oder Sitzhöhen-Verstellkraft der Sitzhöhen-Verstelleinrichtung oder der Kopplungsschwinge an das Sitzpolster-Seitenrahmenteil zu übertragen oder an dem Sitzpolster-Seitenrahmenteil abzustützen. In diesem Fall ist der andere Gabelschenkel mit der Rückenlehnenneigung-Verstelleinrichtung verbunden, wobei möglich ist, dass dieser Gabelschenkel Getriebeelemente der Rückenlehnenneigung-Verstelleinrichtung lagert oder diese hiermit verbunden ist. Der andere Gabelschenkel dient in diesem Fall dazu, eine Rückenlehnenneigung-Haltekraft und/oder einen Rückenlehnenneigung-Verstellkraft an das Sitzpolster-Seitenrahmenteil zu übertragen oder hieran abzustützen. Für diese Ausgestaltung der Erfindung ist somit das Sitzpolster-Seitenrahmenteil multifunktional genutzt, da dieses mit den beiden Gabelschenkeln einerseits für die Gewährleistung der Sitzhöhe und andererseits für die Gewährleistung der Rückenlehnenneigung dient.

Vorzugsweise ist zwischen den beiden Gabelschenkeln des Sitzpolster-Seitenrahmenteils das Rückenlehnen-Seitenrahmenteil angeordnet, so dass die Gabelschenkel gabelartig das Rückenlehnen-Seitenrahmenteil von der Vorderseite teilweise umgreifen. Hierbei können die Gabelschenkel derart gekröpft ausgebildet sein, dass die dem Grundschenkel abgewandten Endbereiche parallel zueinander orientiert sind oder parallel zueinander orientierte Lageraugen ausbilden können. Im Rahmen der Erfindung können die Gabelschenkel jeweils ein Lagerauge aufweisen, wobei ergänzend möglich ist, dass das Rückenlehnen-Seitenrahmenteil ein Lagerauge aufweist. Das Lagerauge eines innenliegenden Gabelschenkels dient dabei insbesondere der Verbindung mit dem Verbindungsrohr, während das Lagerauge des anderen Gabelschenkels und das Lagerauge des Rückenlehnen-Seitenrahmenteils insbesondere der Aufnahme der Bestandteile und der Verbindung mit den Bestandteilen der Rückenlehnenneigung-Verstelleinrichtung dienen. Während grundsätzlich möglich ist, dass die Lageraugenachsen der Lageraugen der Gabelschenkel koaxial zueinander orientiert sind, sind diese bevorzugt mit einem Versatz zueinander angeordnet, woraus sich die zuvor für den Versatz erläuterten Vorteile ergeben können.

Die Erfindung schlägt auch vor, dass das Verstellgetriebe der Rückenlehnenneigung-Verstelleinrichtung oder ein Getriebeteil desselben "sandwichartig" zwischen einem (innenliegend und/oder außenliegend angeordneten) Gabelschenkel und dem Rückenlehnen-Seitenrahmenteil aufgenommen ist, wobei eine Führung durch die zugeordneten Lageraugen erfolgen kann. Möglich ist, dass in Querrichtung die Getriebeelemente des Verstellgetriebes oder Getriebeteils zwischen dem Gabelschenkel und dem Rückenlehnen-Seitenrahmenteil gefangen und/oder geführt sind und/oder diese in den Lageraugen aufgenommen und fixiert oder drehbar gelagert sind. Je nach aufgebrachtem Verstellmoment ist ein Getriebeelement des Verstellgetriebes dann mit dem zugeordneten Gabelschenkel des Sitzpolster-Seitenrahmenteils gekoppelt und hieran abgestützt, während ein anderes Getriebeelement an dem Rückenlehnen-Seitenrahmenteil abgestützt sein kann. Ein elektrisch oder manuell erzeugtes Betätigungsmoment wird mittels des Verstellgetriebes umgewandelt in ein Verstellmoment, welches zwischen dem Gabelschenkel und dem Rückenlehnen-Seitenrahmenteil wirkt und die gewünschte Verstellung des Neigungswinkels herbeiführen kann.

Für die konstruktive Ausgestaltung des Sitzpolster-Seitenrahmenteils und insbesondere die Ausgestaltung des Grundschenkels einerseits und der Gabelschenkel andererseits gibt es im Rahmen der Erfindung vielfältige Möglichkeiten. Für einen Vorschlag der Erfindung bilden der Grundschenkel und ein Gabelschenkel, insbesondere der lateral innenliegende Gabelschenkel, einen einstückigen Grundkörper. An dem einstückigen Grundkörper ist dann der andere Gabelschenkel lösbar montiert, bspw. angeschraubt. Dies vereinfacht beispielsweise die Montage, bei der zunächst eine Montage des Verbindungsrohrs, unter Umständen mit bereits hieran befestigten Kopplungsschwingen, an dem einstückigen Grundkörper erfolgen kann. Es erfolgt dann die Montage dieser Teilmontageeinheit an dem Rückenlehnen-Seitenrahmenteil, wobei bereits mit diesem Montageschritt das Verstellgetriebe montiert werden kann oder in einem anschließenden Montageschritt, in dem der andere Gabelschenkel an dem einstückigen Grundkörper montiert wird, das Verstellgetriebe montiert wird. Der andere Gabelschenkel kann somit von außen an den Grundkörper angesetzt werden und, beispielsweise über Befestigungsschrauben, an dem Grundkörper montiert werden.

Grundsätzlich möglich ist auch, dass die Rückenlehnen-Seitenrahmenteile ein- oder mehrstückig ausgebildet sind. Für einen Vorschlag der Erfindung weisen die Rückenlehnen-Seitenrahmenteile jeweils ein Lageraugen-Rückenlehnenteil auf. Dieses Lageraugen-Rückenlehnenteil verfügt über eine verhältnismäßig kleine Erstreckung in Richtung der Höhe der Rückenlehne, wenn diese vertikal orientiert ist, und weist lediglich das Lagerauge und einen Befestigungsabschnitt auf. Die Rückenlehnen-Seitenrahmenteile weisen dann auch ein Längsstreben-Rückenlehnenteil auf. Das Längsstreben-Rückenlehnenteil weist einen Befestigungsbereich auf, der mit dem Befestigungsbereich des Lageraugen-Rückenlehnenteils lösbar, insbesondere über Befestigungsschrauben, montiert werden kann. Des Weiteren weist das Längsstreben-Rückenlehnenteil einen längeren Abschnitt auf, der sich entlang der Rückenlehne in Richtung des oberen Endes derselben erstreckt. Möglich ist dabei, dass die Längsstreben-Rückenlehneneinheit mit ihrem Befestigungsbereich passgenau in den Befestigungsbereich des Lageraugen-Rückenlehnenteils einsetzbar ist, wobei eine derart geschaffene Verbindung dann über Befestigungsschrauben gesichert werden kann. Für diese Ausgestaltung sind die Lageraugen-Rückenlehnenteile über mindestens eine Verbindungsstrebe miteinander verbunden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer vereinfachten Seitenansicht einen Teilausschnitt einer Tragstruktur eines Kraftfahrzeugsitzes.
- **Fig. 2**: zeigt den Kraftfahrzeugsitz gemäß Fig. 1 in einer räumlichen Detailansicht schräg von vorn.
- **Fig. 3 und 4**: zeigen in unterschiedlichen räumlichen Ansichten Details des Kraftfahrzeugsitzes gemäß Fig. 1 und 2.
- **Fig. 5**: zeigt in einer räumlichen Ansicht ein Sitzpolster-Seitenrahmenteil eines Kraftfahrzeugsitzes gemäß Fig. 1 bis 4, wobei das Sitzpolster-Seitenrahmenteil mit einem Grundkörper, der einen Grundschenkel und einen Gabelschenkel ausbildet, sowie einem hiermit montierbaren anderen Gabelschenkel ausgebildet ist.
- **Fig. 6**: zeigt in einer geschnittenen Darstellung von oben ein Detail eines Kraftfahrzeugsitzes gemäß Fig. 1 bis 5 im Bereich einer Rückenlehnenneigung-Verstelleinrichtung.
- **Fig. 7 bis 10**: zeigen eine weitere Ausgestaltung eines Kraftfahrzeugsitzes in unterschiedlichen räumlichen Detailansichten.
- **Fig. 11**: zeigt ein Verbindungsrohr, eine hintere Kopplungsschwinge, einen Grundkörper eines Sitzpolster-Seitenrahmenteils, ein Rückenlehnen-Seitenrahmenteil, ein Verstellgetriebe und einen Gabelschenkel des Sitzpolster-Seitenrahmenteils sowie eine Kopplungsstange in einer räumlichen Explosionsdarstellung.
- **Fig. 12**: zeigt in einer räumlichen, stark schematisierten Ansicht ein Verstellgetriebe einer Rückenlehnenneigung-Verstelleinrichtung.
- **Fig. 13**: zeigt in einer Seitenansicht schematisch den Kraftfahrzeugsitz mit dem Sitzpolster und dem Rückenlehnenpolster mit einer Neigung der Rückenlehne, die geeignet für ein Sitzen ist.
- **Fig. 14**: zeigt den Kraftfahrzeugsitz gemäß Fig. 13 mit dem Sitzpolster und dem Rückenlehnenpolster in einer Liegestellung.

### FIGURENBESCHREIBUNG

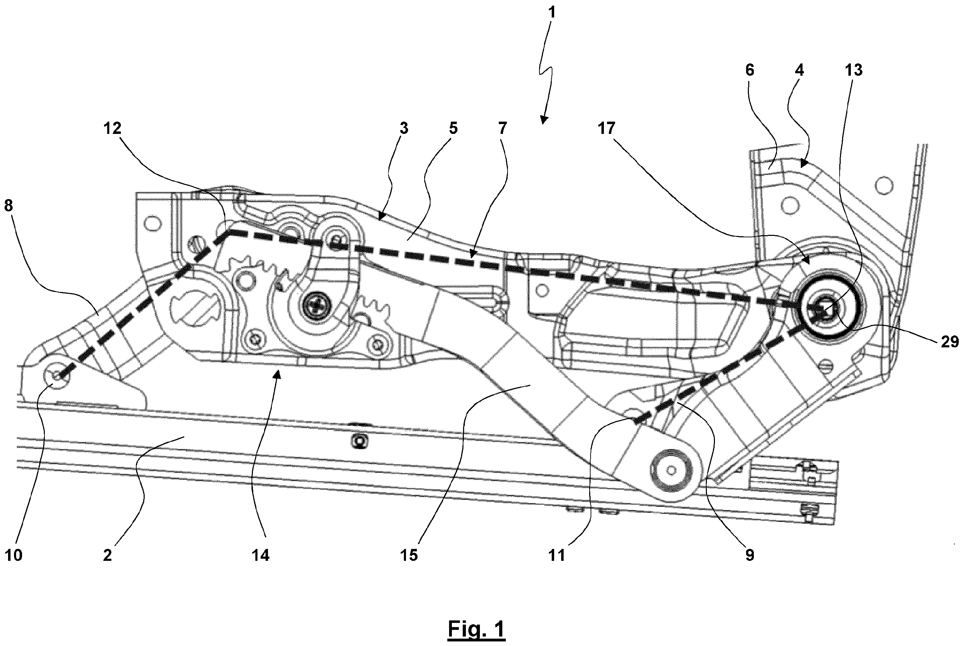

**Fig. 1** zeigt einen Ausschnitt eines Kraftfahrzeugsitzes 1 mit dessen mechanischer Trag- und Rahmenstruktur. Der Kraftfahrzeugsitz 1 ist über eine Längsschiene 2 an dem Boden des Fahrzeugs abgestützt, wobei der Kraftfahrzeugsitz 1 über einen hier nicht näher erläuterten Mechanismus entlang der Längsschiene 2 verschieblich und in unterschiedlichen Positionen fixierbar ist. Der Kraftfahrzeugsitz 1 weist einen Sitzpolster-Rahmen 3 und einen Rückenlehnen-Rahmen 4 auf. Der Sitzpolster-Rahmen 3 trägt ein Sitzpolster, während der Rückenlehnen-Rahmen 4 ein Rückenlehnenpolster trägt. Der Sitzpolster-Rahmen 3 verfügt über zwei parallele Sitzpolster-Seitenrahmenteile 5, während der Rückenlehnen-Rahmen 4 über zwei parallele Rückenlehnen-Seitenrahmenteile 6 verfügt. Die Seitenrahmenteile 5, 6 können dabei integraler Bestandteil weiterer Teile des Rahmens 3, 4 sein oder mit anderen Bestandteilen stoffschlüssig verbunden sein, insbesondere durch Verschweißen oder Verkleben oder anderweitig hiermit verbunden sein, insbesondere durch Verschrauben, Vernieten u. ä. Die Seitenrahmenteile 4, 5 können selber ein- oder mehrteilig ausgebildet sein, wobei auch einzelne Abschnitte durch Verschweißen oder anderweitige Verbindungsverfahren miteinander verbunden sein können. Die Seitenrahmenteile 5, 6 sind vorzugsweise in einem plastischen Formgebungsverfahren, insbesondere einem Umform- oder Pressverfahren oder Tiefziehverfahren, hergestellt.

Der Sitzpolster-Rahmen 3 ist auf beiden lateralen Seiten über eine Viergelenkkette 7 an der Längsschiene 2 abgestützt. Die Viergelenkkette 7 weist eine vordere Kopplungsschwinge 8 und eine hintere Kopplungsschwinge 9 auf. Die Kopplungsschwingen 8, 9 sind jeweils in einem unteren Endbereich über ein Schwenklager 10, 11 an einem an der Längsschiene 2 verschieblich und fixierbar geführten Lagerbock angelenkt. In den oberen Endbereichen sind die Kopplungsschwingen 8, 9 jeweils über ein Schwenklager 12, 13 an dem Sitzpolster-Seitenrahmenteil 5 angelenkt. In Fig. 1 ist gestrichelt schematisch die auf diese Weise gebildete Viergelenkkette 7 dargestellt.

Der Kraftfahrzeugsitz 1 verfügt über eine Sitzhöhen-Verstelleinrichtung 14 grundsätzlich bekannter Ausgestaltung. Für das dargestellte Ausführungsbeispiel ist an der Längsschiene 2 (mit der Längsverschiebung des Kraftfahrzeugsitzes 1 in Längsrichtung verschieblich) eine Zahnstange 15 angelenkt. Mit der Zahnstange 15 kämmt ein Ritzel eines Sitzhöhen-Verstellantriebs 16 (ggf. mit in dem Kraftfluss angeordnetem Getriebe), der an dem Sitzpolster-Rahmen 3, hier dem Sitzpolster-Seitenrahmenteil 5, gehalten ist. Möglich ist, dass der Sitzhöhen-Verstellantrieb 16 (mit einem etwaigen Getriebe und/oder dem Ritzel) in einen dann offenen Innenraum des Sitzpolster-Seitenrahmenteils 5 integriert ist oder an diesem gehalten ist. Bewegt sich der Sitzhöhen-Verstellantrieb 16 infolge der Verdrehung des Ritzels entlang der Zahnstange 15, kommt es zu einer Verstellung der Gelenkwinkel der Viergelenkkette 7, die mit einer Verstellung der Höhe H des Kraftfahrzeugsitzes 1 einhergeht. Je nach kinematischer Auslegung der Viergelenkkette 7 kann eine Verstellung der Höhe H des Kraftfahrzeugsitzes 1 auch mit einer Veränderung der Neigung des Sitzpolster-Rahmens 3 und der Sitzpolster-Seitenrahmenteile 5 verbunden sein.

Des Weiteren verfügt der Kraftfahrzeugsitz 1 über eine Rückenlehnenneigung-Verstelleinrichtung 17, welche im Stand der Technik auch als "Recliner" bezeichnet wird. Über den Rechner kann eine Verstellung des Neigungswinkels des Rückenlehnen-Rahmens 4 gegenüber dem Sitzpolster-Rahmen 3 erfolgen. Hierbei kann die Rückenlehnenneigung-Verstelleinrichtung 17 manuell ausgebildet sein mit einem Betätigungsorgan wie einem Betätigungsrad oder einem Betätigungshebel, auf welches oder welchen die auf dem Kraftfahrzeugsitz 1 sitzenden Person Betätigungskräfte aufbringen kann, die dann über ein Getriebe der Rückenlehnenneigung-Verstelleinrichtung 17 umgewandelt wird in ein Verstellmoment zur Verstellung der Rückenlehnenneigung. Ebenfalls möglich ist, dass eine elektromotorische Betätigung der Rückenlehnenneigung-Verstelleinrichtung 17 erfolgt.

Grundsätzlich können für die Sitzhöhen-Verstelleinrichtung 14 und die Rückenlehnenneigung-Verstelleinrichtung 17 beliebige, an sich aus dem Stand der Technik bekannte derartige Einrichtungen Einsatz finden. Ohne dass eine Beschränkung auf diese Ausführungsformen erfolgen soll, kann auch ein Einwirken der Sitzhöhen-Verstelleinrichtung 14 nicht auf das Sitzpolster-Seitenrahmenteil 5 erfolgen, wie dies für das dargestellte Ausführungsbeispiel der Fall ist, sondern eine Erzeugung eines Verstellmoments mittels eines Zahneingriffes an einer Umfangsverzahnung der Koppelschwingen 8 oder 9 erfolgen. Auch die Sitzhöhen-Verstelleinrichtung 14 kann manuell ausgebildet sein, wie dies aus dem Stand der Technik bekannt ist. Weitere, die Erfindung nicht beschränkende Beispiele für die Ausgestaltung der Rückenlehnenneigung-Verstelleinrichtung 17 können beispielsweise dem Gebrauchsmuster DE 20 2020 107 166 U1 und DE 10 2020 122 541 A1 und dem darin angeführten Stand der Technik entnommen werden. Ohne Beschränkung auf diese Ausführungsbeispiele wird hinsichtlich der Ausgestaltung der Rückenlehnenneigung-Verstelleinrichtung 17 und eines darin enthaltenen Getriebes oder des Rechners verwiesen auf die Druckschriften CN 215097153 U, DE 10 2020 114 396 A1, die nicht vorveröffentlichte Patentanmeldung DE 20 2022 103 376.7, DE 10 2022 103 377.5, DE 10 2022 103 378.3 verwiesen. Wie auch aus den zuvor erläuterten Druckschriften entnommen werden kann, kann die Sitzhöhen-Verstelleinrichtung 14 eine Entriegelungseinrichtung für die Rückenlehne aufweisen, um ein manuelles Verschwenken der Rückenlehne nach vorne zu ermöglichen, um beispielsweise ein Einsteigen von Passagieren durch eine vordere Tür des Kraftfahrzeugs in den Rückraum des Kraftfahrzeugs zu ermöglichen. Möglich ist auch, dass eine automatische Entriegelung einer Längsverriegelung für die Bewegung des Kraftfahrzeugsitzes 1 entlang der Längsschiene 2 in die Rückenlehnenneigung-Verstelleinrichtung 17 integriert ist. Auf diese Weise kann eine so genannte "Easy-Entry-funktion" gewährleistet werden.

In den Sitzpolster-Rahmen 3 und den Rückenlehnen-Rahmen 4 können beliebige weitere Aggregate integriert sein, beispielsweise eine Heiz-Einrichtung, eine Belüftungseinrichtung, eine Massageeinrichtung u. ä.

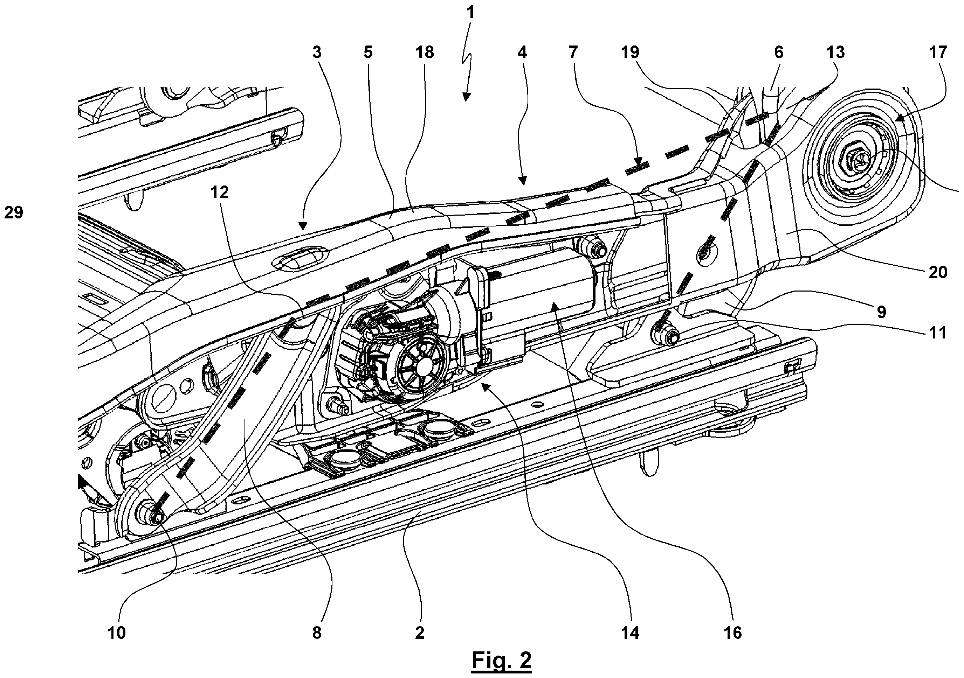

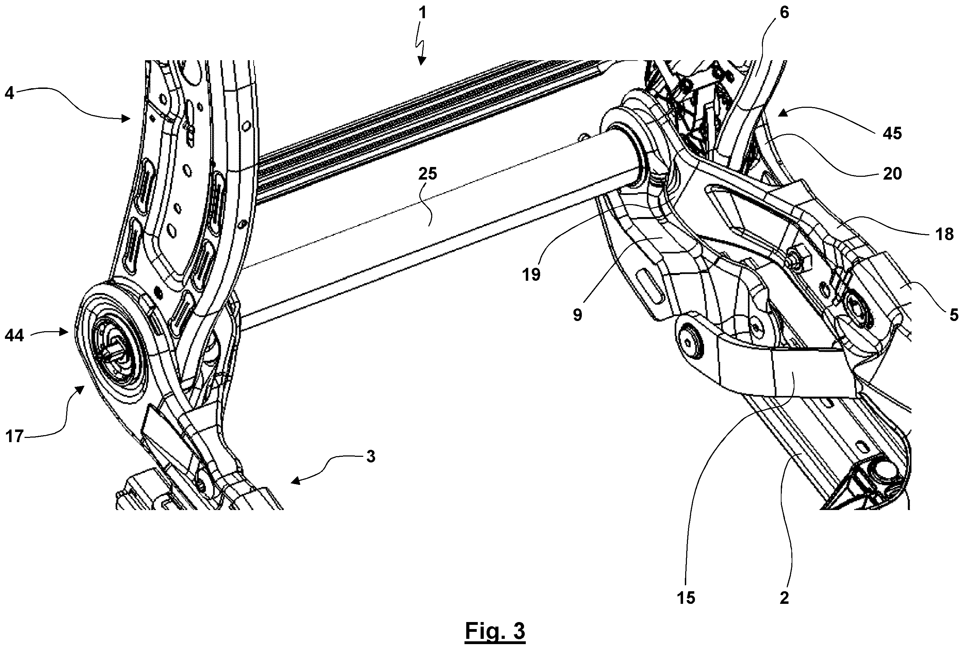

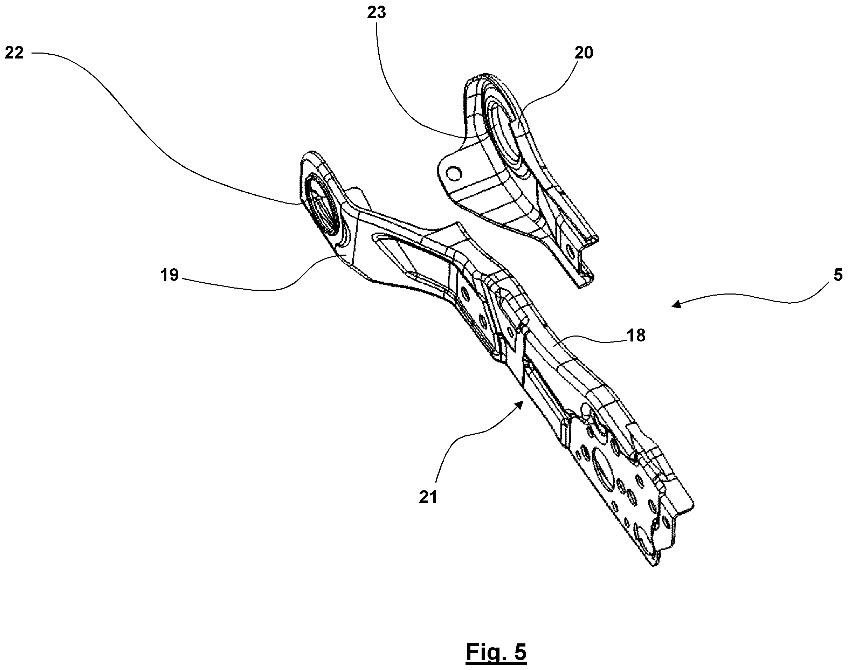

Wie in den **Fig. 2 bis 4** und insbesondere **Fig. 5** zu erkennen ist, ist das Sitzpolster-Seitenrahmenteil 5 in einer vertikalen Ansicht von oben in dem hinteren Endbereich Y-förmig oder gabelförmig ausgebildet mit einem Grundschenkel 18 der Gabel oder des Y sowie zwei von dem Grundschenkel 18 abzweigenden Gabelschenkeln 19, 20. Möglich ist, dass (abweichend zu einem klassischen "Y" oder einer Gabel) der an dem Kraftfahrzeugsitz 1 lateral außenliegende Gabelschenkel 20 einen kleineren Winkel gegenüber dem Grundschenkel 18 bildet oder sogar eine Verlängerung desselben darstellt (vgl. Fig. 5). Aus der Explosionsdarstellung gemäß Fig. 5 ist ersichtlich, dass der lateral innenliegende Gabelschenkel 19 und der Grundschenkel 20 einstückig als Grundkörper 21 ausgebildet sind, an den dann der Gabelschenkel 20 montiert werden kann, insbesondere durch Verschrauben. Vorzugsweise sind die den Grundschenkel 18 und die Gabelschenkel 19, 20 bildenden Bauelemente als offene oder geschlossene Kastenprofile ausgebildet.

Die Gabelschenkel 19, 20 verfügen jeweils über ein Lagerauge 22, 23. Die Gabelschenkel 19, 20 sind dabei derart gekröpft ausgebildet, dass die Lageraugen 22, 23 in parallelen Ebenen angeordnet sind. Während grundsätzlich auch möglich ist, dass die Lageraugenachsen 33, 31 der Lageraugen 22, 23 koaxial zueinander angeordnet sind, verfügen für das dargestellte Ausführungsbeispiel die Lageraugenachsen 33, 31 der Lageraugen 22, 23 bei paralleler Orientierung über einen Versatz 34, der im Folgenden noch erläutert wird. Die Lageraugen 22, 23 dienen der Aufnahme und drehbaren Lagerung von Bestandteilen der Rückenlehnenneigung-Verstelleinrichtung 17 und der verschwenkbaren Lagerung des Rückenlehnen-Rahmens 4 relativ zu dem Sitzpolster-Rahmen 3 je nach Betätigung der Rückenlehnenneigung-Verstelleinrichtung 17.

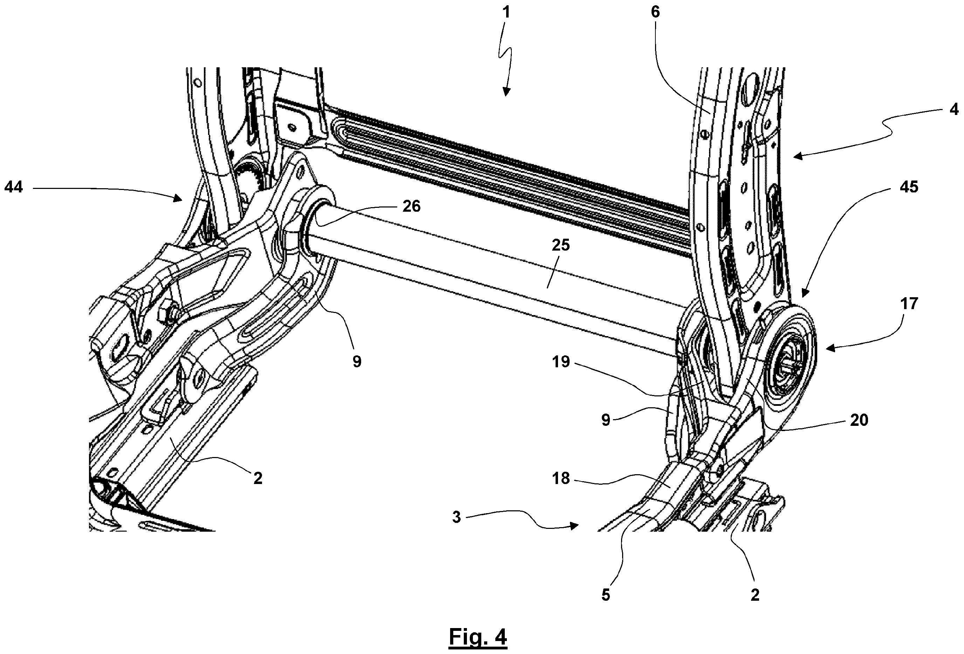

Wie beispielsweise in Fig. 4 zu erkennen ist, ist zwischen den Gabelschenkeln 19, 20 das Rückenlehnen-Seitenrahmenteil 6 angeordnet. Hierbei verfügt das Rückenlehnen-Seitenrahmenteil 6 ebenfalls über ein Lagerauge 24. Die Lageraugenachse 32 des Lagerauges 24 des Rückenlehnen-Seitenrahmenteils 6 ist dabei für das dargestellt Ausführungsbeispiel koaxial zu der Lageraugenachse 31 des Lagerauges 23 des Gabelschenkel 20 angeordnet.

In dem Lagerauge 22 ist drehbar ein Verbindungsrohr 25 derart gelagert, dass sich lediglich ein Dreh-Freiheitsgrad des Verbindungsrohrs 25 gegenüber dem Sitzpolster-Seitenrahmenteil 5 ergibt. Das Verbindungsrohr 25 dient der Verbindung der auf beiden lateralen Seiten angeordneten Sitzpolster-Seitenrahmenteile 5 im hinteren Endbereich zur Bildung des Sitzpolster-Rahmens 3.

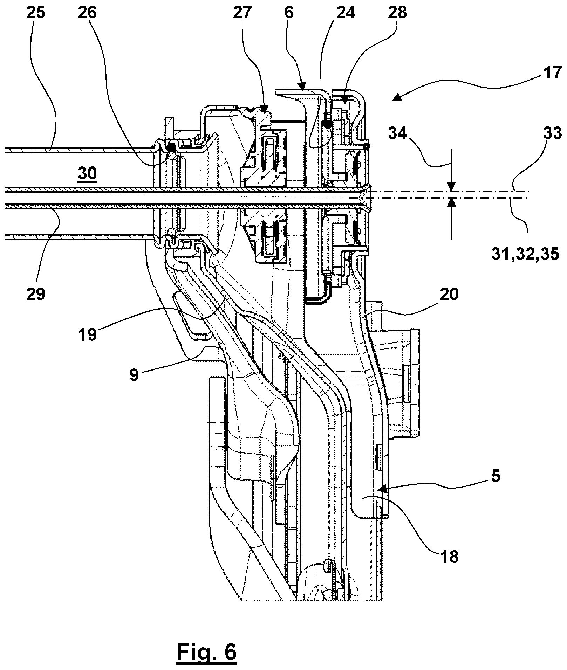

Wie insbesondere in **Fig. 6** zu erkennen ist, ist ein Endbereich der hinteren Kopplungsschwinge 9 mit einem Lagerauge 26 ausgestattet. Im Bereich des Lagerauges 26 ist die Kopplungsschwinge 9 drehfest mit dem Verbindungsrohr 25 verbunden, was durch einen Umformprozess des Verbindungsrohrs 25 derart gewährleistet wird, dass die in Fig. 6 erkennbaren Aufwölbungen form- und/oder reibschlüssig mit dem Lagerauge 26 derart zusammenwirken, dass eine Befestigung zwischen dem Verbindungsrohr 25 und der Kopplungsschwinge 9 ohne verbleibenden Freiheitsgrad existiert.

Für das dargestellte Ausführungsbeispiel ist das Verbindungsrohr 25 drehfest mit der hinteren Kopplungsschwinge 9 verbunden, während eine drehbare Lagerung des Verbindungsrohrs 25 gegenüber dem Sitzpolster-Seitenrahmenteil 5 erfolgt. Möglich ist alternativ auch eine Ausführungsform, bei welcher die Kopplungsschwinge 9 drehbar an dem Verbindungsrohr 25 gelagert ist, während an eine drehfeste Verbindung des Verbindungsrohrs 25 mit dem Lagerauge 19 des Sitzpolster-Seitenrahmenteils 5 erfolgt.

In Fig. 6 ist auch zu erkennen, dass ein erstes Getriebeteil 27 der Rückenlehnenneigung-Verstelleinrichtung 17 in das Innere des Lagerauges 20 integriert ist und/oder zwischen dem Gabelschenkel 20 und dem Rückenlehnen-Seitenrahmenteil 6 angeordnet oder gefangen oder aufgenommen ist, während ein zweites Getriebeteils 28 der Rückenlehnenneigung-Verstelleinrichtung 17, welches mit dem ersten Getriebeteil 27 zusammenwirkt, zwischen dem Gabelschenkel 19 und dem Rückenlehnen-Seitenrahmenteil 6 gefangen, angeordnet oder aufgenommen sein kann.

In Fig. 6 ist auch zu erkennen, dass eine Kopplungsstange 29 vorhanden ist. Die Kopplungsstange 29 koppelt mechanisch unter Übertragung eines Kopplungsmomentes die Rückenlehnenneigung-Verstelleinheiten 44, 45 der Rückenlehnen-Verstelleinrichtung 17 auf beiden lateralen Seiten des Kraftfahrzeugsitzes 1 miteinander derart, dass einerseits eine gleichmäßige Verstellung der Neigung auf beiden Seiten erfolgt und andererseits auch eine Abstützung einer auf die Rückenlehne wirkenden Beanspruchung mittels beider Rückenlehnenneigung-Verstelleinheiten 44, 45, wenn diese verriegelt sind, gewährleistet ist. Die Kopplungsstange 29 erstreckt sich dabei durch einen Innenraum 30 des Verbindungsrohrs 25, durch das Lagerauge 26, das Lagerauge 22 des Gabelschenkels 19, das Lagerauge 24 des Rückenlehnen-Seitenrahmenteils 6 und das Lagerauge 23 des Gabelschenkels 20, wobei sich die Kopplungsstange 29 auch durch die Getriebeteile 27, 28 der Rückenlehnenneigung-Verstelleinrichtung 17 zumindest teilweise oder, wie hier dargestellt, vollständig hindurch erstrecken kann.

In der Ansicht gemäß Fig. 6 ist zu erkennen, dass die Längsachse der Kopplungsstange 29 in einer Projektion auf eine horizontale Ebene gegenüber der Längsachse des Verbindungsrohrs 25 mit einer Versatzkomponente nach vorne verlagert ist, wobei diese Versatzkomponente insbesondere 5 % bis 50 % oder 5 % bis 40 % oder 10 % bis 30 % von dem Radius des Innenraums 30 des Verbindungsrohrs 25 beträgt, sofern das Verbindungsrohr 25 einen kreisringförmigen Querschnitt aufweist. Möglich ist auch, dass eine Versatzkomponente der Kopplungsstange 29 in einer Projektion auf eine Vertikalebene gegenüber der Längsachse des Verbindungsrohrs 25 nach unten erfolgt, wobei in diesem Fall die Versatzkomponente nach unten 5 % bis 50 % oder 5 % bis 40 % oder 10 % bis 30 % des Radius des Innenraums 30 des Verbindungsrohrs 25 betragen kann, wenn das Verbindungsrohr 25 einen kreisringförmigen Querschnitt aufweist.

In Fig. 6 sind einerseits die Lageraugenachsen 31, 32 des Lagerauges 24 des Rückenlehnen-Seitenrahmenteils 6 und des Lagerauges 23 des Gabelschenkels 20 und andererseits die Lageraugenachse 33 des Lagerauges 22 des Gabelschenkels 11 dargestellt, die einen Versatz 34 aufweisen. Die Lageraugenachsen 31, 32 können dabei der Verstellachse 35 der Rückenlehnenneigung-Verstelleinrichtung 17 und/oder der Verstellachse, um die bei der Veränderung der Neigung der Rückenlehen die Rückenlehne verschwenkt wird, entsprechen. Der Versatz 34 setzt sich dabei u. U. aus einer vertikalen Versatzkomponente und einer horizontalen Versatzkomponente zusammen.

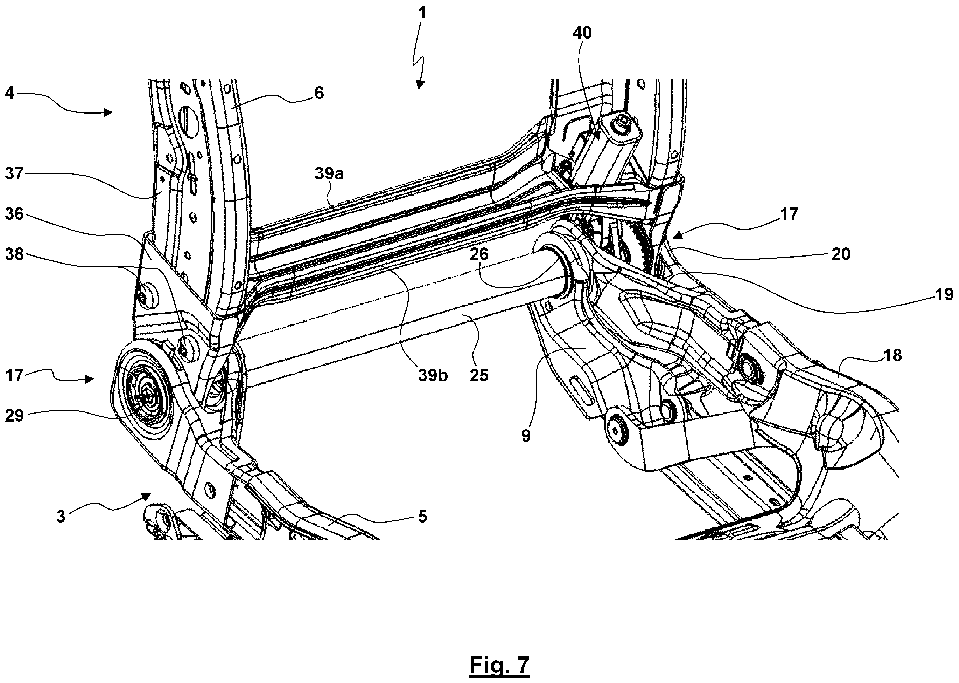

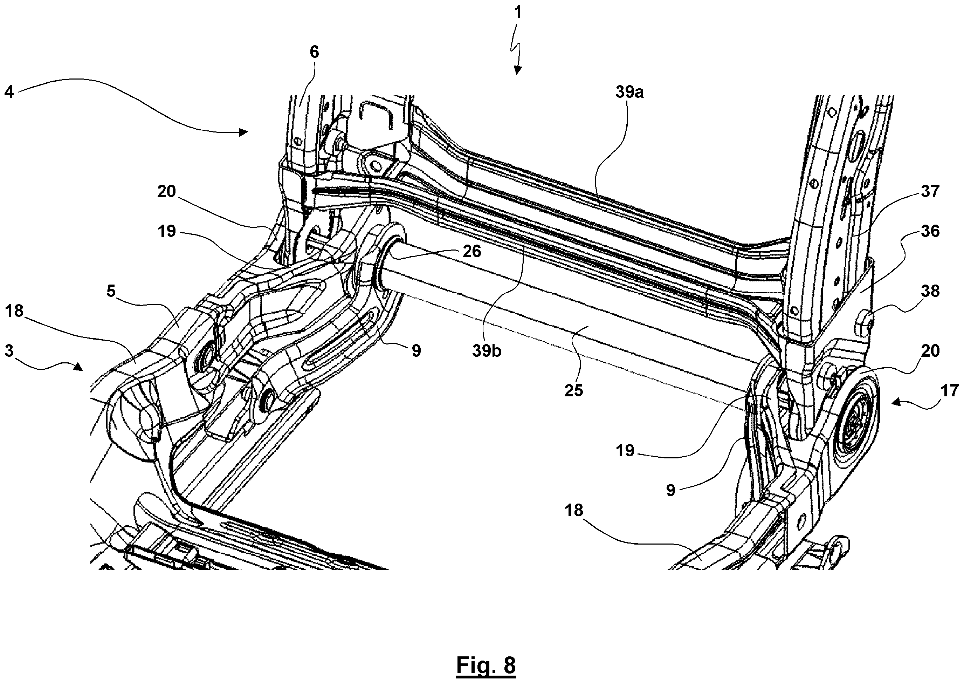

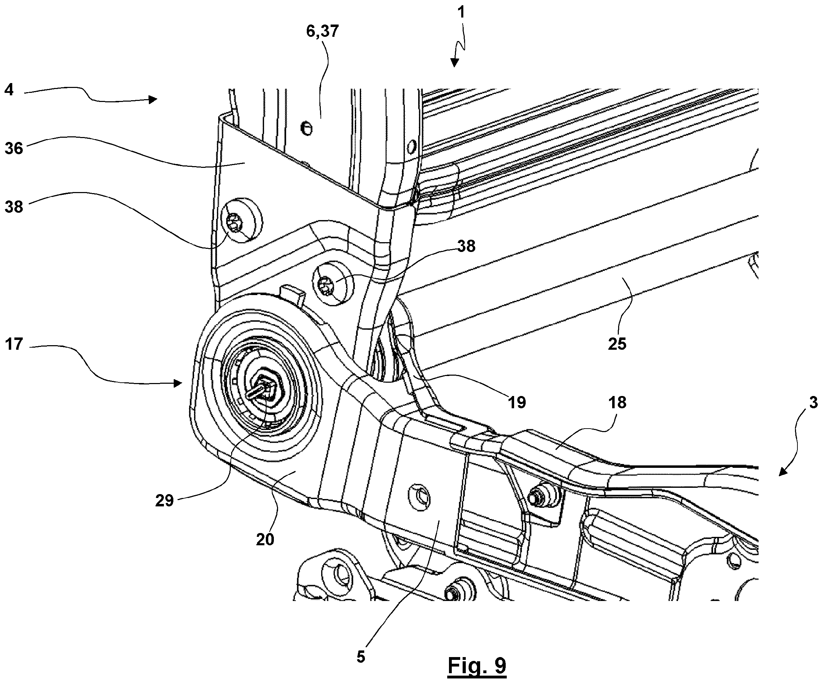

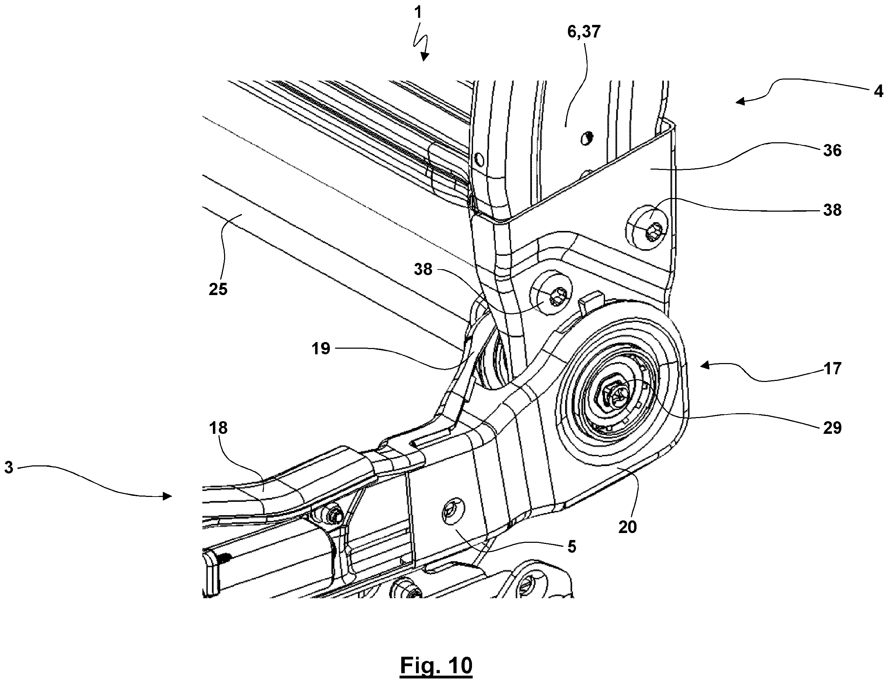

Insbesondere in den **Fig. 7****,** **8****,** **9****,** **10** ist zu erkennen, dass die Rückenlehnen-Seitenrahmenteile 6 zweiteilig ausgebildet sind mit einem Lageraugen-Rückenlehnenteil 36, welches das Lagerauge 24 ausbildet, und einem Längsstreben-Rückenlehnenteil 37, welches sich über einen Großteil der Seite der Rückenlehne erstreckt und insbesondere bis zum oberen Endbereich des Rückenlehnen-Rahmens 4 erstreckt. Das Lageraugen-Rückenlehnenteil 36 und das Längsstreben-Rückenlehnenteil 37 sind passgenau ineinander gesteckt und über Befestigungsschrauben 38 miteinander verschraubt. Das rechte und linke Lageraugen-Rückenlehnenteil 36 sind über mindestens eine Verbindungsstrebe 39a, 39b miteinander verbunden, die mit den Lageraugen-Rückenlehnenteilen 36 verschraubt, verschweißt, verstemmt oder anderweitig fest verbunden sind. Hingegen erfolgt eine Verbindung der Längsstreben-Rückenlehnenteile 37 im unteren Endbereich mittelbar über die Verbindungsstrebe 39 der Lageraugen-Rückenlehnenteile 36, ohne dass an den Längsstreben-Rückenlehnenteilen 37 zusätzliche direkte Verbindungsstreben 39 im unteren Endbereich vorgesehen sind. Hingegen kann im mittigen oder oberen Endbereich des Sitzpolster-Rahmens 3 mindestens eine in Querrichtung orientierte Verbindungsstrebe an den Längsstreben-Rückenlehnenteilen 37 befestigt sein.

Die zweiteilige Ausgestaltung der Rückenlehnen-Seitenrahmenteile 6 ermöglicht eine Fertigung in einer Fertigungsstraße, in der zunächst lediglich der Sitzpolster-Rahmen 3 mit zugeordneten Bauelementen sowie von dem Rückenlehnen-Rahmen 4 ausschließlich die Lageraugen-Rückenlehnenteile 36 mit der Verbindungsstrebe 39 angeordnet sind. An dieser Teilmontageeinheit können dann die weiteren Aggregate montiert werden. Insbesondere kann die Montage mit der Sitzhöhen-Verstelleinrichtung 14 und/oder der Rückenlehnenneigung-Verstelleinrichtung 17 erfolgen, da sämtliche Bauelemente, die Bestandteil der Rückenlehnenneigung-Verstelleinrichtung 17 sind oder mit dieser verbunden sind, an dem Lageraugen-Rückenlehnenteil 36 vorhanden sind oder an dieser montiert werden können. Erst in einem späteren Montageschritt kann dann der obere Teil der Rückenlehne montiert werden. Insbesondere kann in dem späteren Montageschritt dann ein Einstecken der Längsstreben-Rückenlehnenteile 37 in die Lageraugen-Rückenlehnenteile 36 und dann die Befestigung mittels der Befestigungsschrauben 38 erfolgen.

Als weiteres Detail ist in Fig. 7 zu erkennen, dass eine Betätigung der Rückenlehnenneigung-Verstelleinrichtung 17 über einen elektrischen Rückenlehnenneigung-Verstellantrieb 40 erfolgen kann. Auch der Rückenlehnenneigung-Verstellantrieb 40 kann bereits in dem erläuterten Teilmontageschritt, indem die Längsstreben-Rückenlehnenteile 37 noch nicht montiert sind, an der Teilmontageeinheit montiert sein, wobei, wie in Fig. 7 ersichtlich, ein Endbereich des Rückenlehnenneigung-Verstellantriebs 40 aus dieser Teilmontageeinheit nach oben herausstehen kann. Mit der Verbindung der Längsstreben-Rückenlehnenteile 37 mit dem Lageraugen-Rückenlehnenteil 36 erfolgt dann das Fügen benachbart dem Rückenlehnenneigung-Verstellantrieb 40, wobei auch möglich ist, dass der oben liegende Endbereich des Rückenlehnenneigung-Verstellantriebs 40 in einen nach unten offenen Innenraum des Längsstreben-Rückenlehnenteils 37 eintritt.

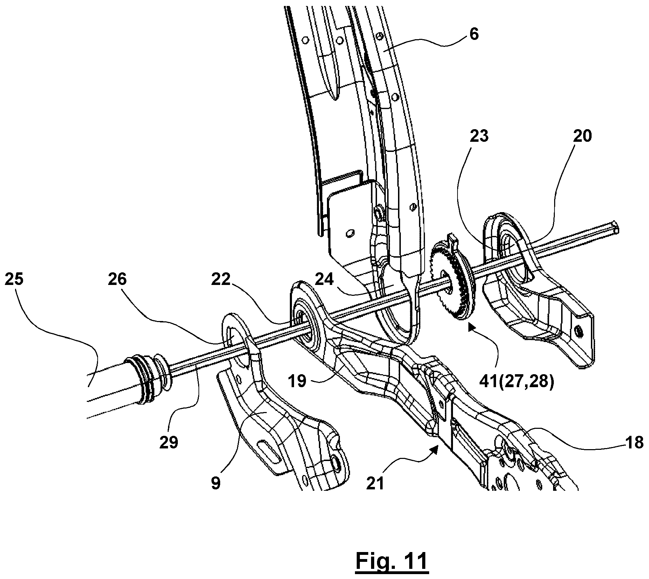

In der Explosionsdarstellung gemäß **Fig. 11** ist zu erkennen, dass die Rückenlehnenneigung-Verstelleinrichtung 17 über ein Verstellgetriebe 41 verfügen kann. Möglich ist hierbei, dass das Verstellgetriebe 41 Getriebeteile 27, 28 aufweist. Für das in Fig. 11 dargestellte Ausführungsbeispiel ist das Verstellgetriebe 41 bzw. mindestens ein Getriebeteil 27, 28 desselben zwischen dem Grundschenkel 20 des Sitzpolster-Seitenrahmenteils 5 und das Rückenlehnen-Seitenrahmenteil 6, insbesondere das Lageraugen-Rückenlehnenteil 36, montiert, wobei die Lageraugen 23, 24 der Drehführung eines Getriebelementes oder Gangrades des Verstellgetriebes 41 dienen können.

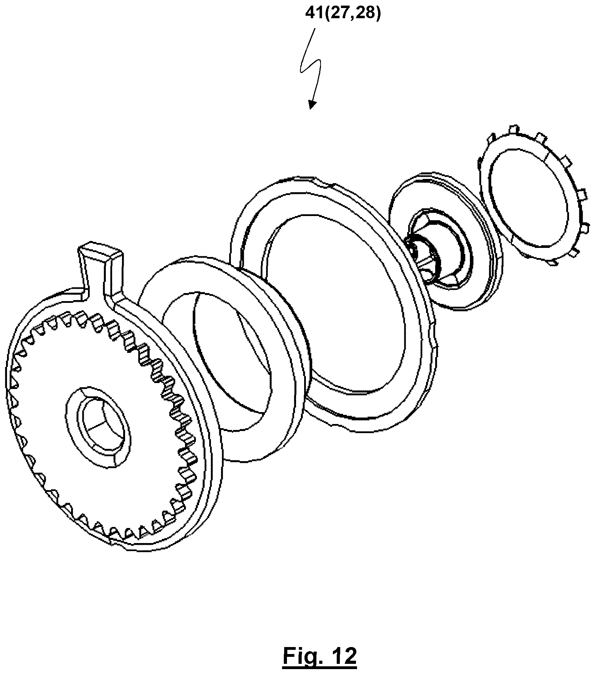

Stark vereinfacht (ohne die Darstellung der einzelnen Zahnverbindungen) ist das Verstellgetriebe 41 mit den unterschiedlichen Bestandteilen in **Fig. 12** dargestellt.

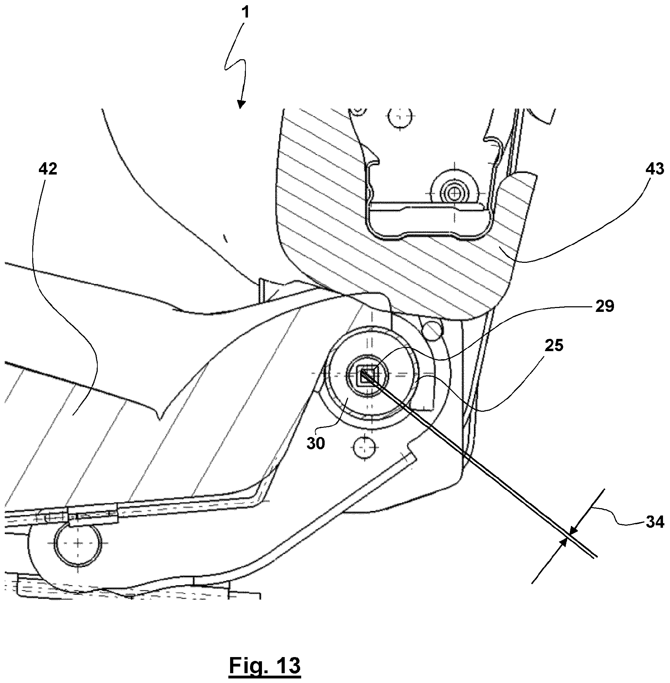

**Fig. 13** zeigt den Kraftfahrzeugsitz 1 mit dem von dem Sitzpolster-Rahmen 3 gehaltenen Sitzpolster 42 und den von dem Rückenlehnen-Rahmen 4 gehaltenen Rückenlehnenpolster 43.

Zu erkennen ist auch hier ein Versatz 34 zwischen den Lageraugenachsen 31, 32 und damit der Verstellachse 35 einerseits und der Lageraugenachse 33 andererseits. In diesem Fall verfügt der Versatz 34 sowohl über eine Versatzkomponente in horizontaler Richtung nach vorne als auch über eine ungefähr gleich große Versatzkomponente in vertikaler Richtung nach unten.

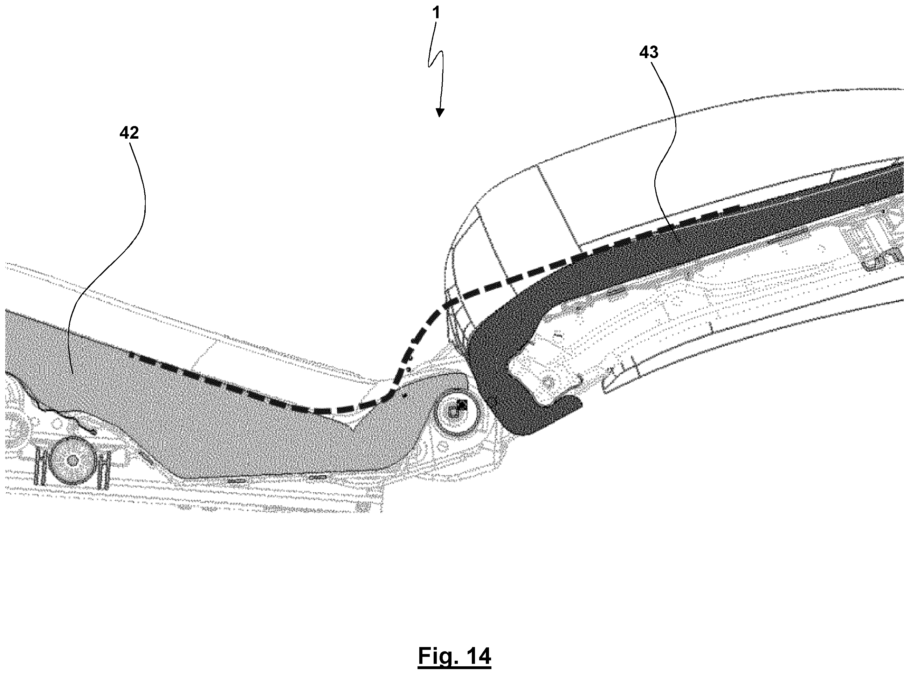

**Fig. 14** zeigt den Kraftfahrzeugsitz 1 für eine Neigung der Rückenlehne in eine Liegestellung. Zu erkennen ist hier, dass sich durch die erfindungsgemäße Ausgestaltung und die zuvor erläuterte Wahl des Versatzes 34 eine Begradigung der Auflagefläche für die auf dem Kraftfahrzeugsitz 1 liegende Person ergibt.

### BEZUGSZEICHENLISTE

- 1: Kraftfahrzeugsitz
- 2: Längsschiene
- 3: Sitzpolster-Rahmen
- 4: Rückenlehnen-Rahmen
- 5: Sitzpolster-Seitenrahmenteil
- 6: Rückenlehnen-Seitenrahmenteil
- 7: Viergelenkkette
- 8: vordere Kopplungsschwinge
- 9: hintere Kopplungsschwinge
- 10: Schwenklager
- 11: Schwenklager
- 12: Schwenklager
- 13: Schwenklager
- 14: Sitzhöhen-Verstelleinrichtung
- 15: Zahnstange
- 16: Sitzhöhen-Verstellantrieb
- 17: Rückenlehnenneigung-Verstelleinrichtung
- 18: Grundschenkel
- 19: Gabelschenkel
- 20: Gabelschenkel
- 21: Grundkörper
- 22: Lagerauge (von Gabelschenkel 19)
- 23: Lagerauge (von Gabelschenkel 20)
- 24: Lagerauge (von Rückenlehnen-Seitenrahmenteil 6)
- 25: Verbindungsrohr
- 26: Lagerauge (von Kopplungsschwinge 9)
- 27: Getriebeteil
- 28: Getriebeteil
- 29: Kopplungsstange
- 30: Innenraum
- 31: Lageraugenachse (vom Lagerauge 23 des Gabelschenkels 20)
- 32: Lageraugenachse (vom Lagerauge 24 des Rückenlehnen-Seitenrahmenteils 6)
- 33: Lageraugenachse (vom Lagerauge 22 des Gabelschenkels 19)
- 34: Versatz
- 35: Verstellachse (der Rückenlehnenneigung-Verstelleinrichtung 17)
- 36: Lageraugen-Rückenlehnenteil
- 37: Längsstreben-Rückenlehnenteil
- 38: Befestigungsschraube
- 39: Verbindungsstrebe
- 40: Rückenlehnenneigung-Verstellantrieb
- 41: Verstellgetriebe
- 42: Sitzpolster
- 43: Rückenlehnenpolster
- 44: Rückenlehnenneigung-Verstelleinheit
- 45: Rückenlehnenneigung-Verstelleinheit

## Patentansprüche

1. Kraftfahrzeugsitz (1) mit
a) einem Sitzpolster-Rahmen (3), der Sitzpolster-Seitenrahmenteile (5) aufweist und über eine Viergelenkkette (7) mit vorderen und hinteren Kopplungsschwingen (8, 9) in einer Höhe H gegenüber einem Boden abgestützt ist,
b) einem Rückenlehnen-Rahmen (4), der Rückenlehnen-Seitenrahmenteile (6) aufweist,
c) einer Sitzhöhen-Verstelleinrichtung (14) für eine Veränderung der Höhe H des Sitzpolster-rahmens (3) und
d) einer Rückenlehnenneigung-Verstelleinrichtung (17) für eine Veränderung der Neigung des Rückenlehnen-Rahmens (4) gegenüber dem Sitzpolster-Rahmen (3) um eine Verstellachse (35),
e) einem Verbindungsrohr (25), welches die beiden Sitzpolster-Seitenrahmenteile (5) miteinander verbindet und mit den hinteren Kopplungsschwingen (9) verbunden ist
**dadurch gekennzeichnet, dass**
f) die Verstellachse (35) durch den Querschnitt des Verbindungsrohrs (25) verläuft.

2. Kraftfahrzeugsitz (1) nach Anspruch 1, **dadurch gekennzeichnet, dass**
a) die Rückenlehnenneigung-Verstelleinrichtung (17) eine rechte Rückenlehnenneigung-Verstelleinheit (44) und eine linke Rückenlehnenneigung-Verstelleinheit (45) aufweist, die über eine Kopplungsstange (29) miteinander gekoppelt sind, und
b) sich die Kopplungsstange (29) durch das Verbindungsrohr (25) hindurch erstreckt.

3. Kraftfahrzeugsitz (1) nach einem der vorhergehenden Ansprüche, **dadurch gekennzeichnet, dass** sich die Verstellachse (35) und/oder die Kopplungsstange (29) mit einem Versatz (34) durch das Verbindungsrohr (25) erstrecken/erstreckt.

4. Kraftfahrzeugsitz (1) nach einem der vorhergehenden Ansprüche, **dadurch gekennzeichnet, dass** das Sitzpolster-Seitenrahmenteil (5) Y-förmig oder gabelförmig ausgebildet ist mit einem Grundschenkel (18) und zwei Gabelschenkeln (19, 20).

5. Kraftfahrzeugsitz (1) nach Anspruch 4, **dadurch gekennzeichnet, dass**
a) ein Gabelschenkel (19) mit der Sitzhöhen-Verstelleinrichtung (14) oder der hinteren Kopplungsschwinge (9) verbunden ist, so dass eine Sitzhöhen-Haltekraft und/oder Sitzhöhen-Verstellkraft der Sitzhöhen-Verstelleinrichtung (14) oder Kopplungsschwinge (9) über den Gabelschenkel (19) an das Sitzpolster-Seitenrahmenteil (5) übertragen wird und/oder an dem Sitzpolster-Seitenrahmenteil (5) abgestützt wird, und
b) der andere Gabelschenkel (20) mit der Rückenlehnenneigung-Verstelleinrichtung (17) verbunden ist, so dass eine Rückenlehnenneigung-Haltekraft und/oder Rückenlehnenneigung-Verstellkraft über den anderen Gabelschenkel (20) an das Sitzpolster-Seitenrahmenteil (5) übertragen wird und/oder an dem Sitzpolster-Seitenrahmenteil (5) abgestützt wird.

6. Kraftfahrzeugsitz (1) nach Anspruch 4 oder 5, **dadurch gekennzeichnet, dass** zwischen den beiden Gabelschenkeln (19, 20) das Rückenlehnen-Seitenrahmenteil (6) angeordnet ist.

7. Kraftfahrzeugsitz (1) nach einem der Ansprüche 4 bis 6, **dadurch gekennzeichnet, dass** die Gabelschenkel (19, 20) jeweils ein Lagerauge (22, 23) aufweisen.

8. Kraftfahrzeugsitz (1) nach Anspruch 7, **dadurch gekennzeichnet, dass** die Lageraugenachsen (33, 31) der Lageraugen (22, 23) der Gabelschenkel (19, 20) mit einem Versatz (34) zueinander angeordnet sind.

9. Kraftfahrzeugsitz (1) nach Anspruch 7 oder 8, **dadurch gekennzeichnet, dass**
a) zwischen dem Lagerauge (24) des Rückenlehnen-Seitenrahmenteils (6) und dem außenliegend angeordneten Gabelschenkel (20) und/oder
b) zwischen dem Lagerauge (24) des Rückenlehnen-Seitenrahmenteils (6) und dem innenliegend angeordneten Gabelschenkel (19)
ein Verstellgetriebe (41) oder ein Getriebeteil (27, 28) der Rückenlehnenneigung-Verstelleinrichtung (17) angeordnet ist.

10. Kraftfahrzeugsitz (1) nach einem der Ansprüche 4 bis 9, **dadurch gekennzeichnet, dass** der Grundschenkel (18) und ein Gabelschenkel (19) einen einstückigen Grundkörper (21) bilden und der andere Gabelschenkel (20) an dem Grundkörper (21) montiert ist.

11. Kraftfahrzeugsitz (1) nach einem der vorhergehenden Ansprüche, **dadurch gekennzeichnet, dass** die Rückenlehnen-Seitenrahmenteile (6) jeweils ein Lageraugen-Rückenlehnenteil (36) und ein Längsstreben-Rückenlehnenteil (37) aufweisen, wobei
a) die Lageraugen-Rückenlehnenteile (36) über eine Verbindungsstrebe (39) miteinander verbunden sind und/oder
b) das Längsstreben-Rückenlehnenteil (37) an dem Lageraugen-Rückenlehnenteil (36) montiert ist.
